# EUROPÄISCHE PATENTANMELDUNG

(11) **EP 0 921 482 A2**
(43) Veröffentlichungstag der Anmeldung: **09.06.1999**
(21) Anmeldenummer: 98101273.5
(22) Anmeldetag: 26.01.1998
(51) Int. Cl.: G06F 17/60

(54) **Vorrichtung und Verfahren zur Bestimmung von Verhaltensmustern von Konsumenten und Informationssuchenden in einer Open-Community-Plattform**

(30) Priorität: 02.12.1997 DE 19755473
(71) Anmelder: Cybermind Interactive Europe Multi-Media-Service AG, 13507 Berlin (DE)
(72) Erfinder: Timm, Holger, 14193 Berlin (DE); Richter, Bernd, 38528 Adenbüttel (DE); Halbach, Wulf, Dr., 10967 Berlin (DE)
(74) Vertreter: Scholz, Hartmut, Dipl.-Ing. Patentanwalt

(57) **Zusammenfassung**

Vorrichtung und Verfahren zur Bestimmung von Verhaltensmustern von Konsumenten und Informationssuchenden,
- mit einem Server-System (11), das mit einer Vielzahl von Client-Systemen (12) über eine Netzstruktur (13) verbunden ist,
- mit einer auf dem Server-System (11) bereitgestellten, für den Benutzer (16) die alltäglichen Verhaltensmöglichkeiten anbietenden virtuellen Realität, wobei die virtuelle Realität von dem Client-System (12) darstellbar ist, und das Client-System (12) Navigationsmittel (14) zum Durchschreiten der virtuellen Realität aufweist,
- mit Verhaltensangeboten, die in der virtuellen Realität wirklichkeitsgetreu angeordnet sind,
- mit Kommunikationsangeboten, die in der virtuellen Realität wirklichkeitsgetreu angeordnet sind,
- mit einem Rückkopplungssystem (15), das die Verhaltensweisen des sich durch die virtuelle Realität bewegenden Benutzers (16) auf die Verhaltensangebote und Kommunikationsangebote auswertet.

## Beschreibung

Die Erfindung betrifft eine Vorrichtung und ein Verfahren zur Bestimmung von Verhaltensmustern von Konsumenten und Informationssuchenden in einer Open-Community-Plattform.

Die menschlichen Grundbedürfnisse, die wir auch in alltäglichen Verhaltenssituationen zeigen und die die kommunikativen Grundstrukturen unsere Gesellschaft ausmachen sind: Kommunikation, Partizipation, d.h., teilhaben an gesellschaftlichcn Prozessen, Informationen (Neugier), Wissen, Kreativität, Konsum, Unterhaltung. Gesellschaften sind direkt abhängig von der Kommunikation ihrer Mitglieder, die sich - paradoxer Weise - erst durch ihre Kommunikation als Mitglieder etablieren, da sie im Moment der Kommunikation eine Gesellschaft konstituieren.

Es ist offensichtlich, daß räumlich weit verteilte Gesellschaften zu ihrem Erhalt auf Kommunikationsmedien angewiesen sind. Genauso offensichtlich bedeuten diese technischen Einrichtungen aber eine kommunikative Entfremdung der Partner, da diese technischen Einrichtungen nicht alle menschlichen Ausdrucksformen vermitteln können.

Durch die starke Verbreitung des Internets etablieren sich mittlerweile Elemente der Interaktion wie synchrone Angesichtigkeit in Videokonferenzen, taktile Selbstversicherung in virtuellen Realitäten usw..

Bekannte Techniken wie das WWW (World Wide Web) sind in ihrer Grundstruktur 2-dimensional ausgerichtet. Benutzer, die in ihrer alltäglichen Umgebung ausschließlich mit 3-dimensionalen Strukturen konfrontiert werden, fällt eine Orientierung in dieser 2-dimensionale Abbildung der Welt schwer. Hieraus resultiert ebenfalls ein unnatürliches Verhalten, aus dem keinerlei Schlüsse auf Informations- und Kommunikationsverhalten sowie auf die Wirkung von Werbe- und Marketingmaßnahmen gezogen werden können. Je mehr Möglichkeiten gegeben sind, die Immersionsgrenze zu überschreiten, um so eher akzeptiert der Benutzer die Verhaltensumgebung als Wirklichkeit und um so besser wird die mediale Interaktion und um so natürlicher sein Verhalten und seine Reaktion auf Eindrücke und Angebote.

Aufgabe der vorliegenden Erfindung ist es einen hohen Grad an Immersion zu erreichen, also dem Abtauchen in die virtuelle Welt, um hieraus unmittelbare Schlüsse auf das Verhalten und die Eindrücke der Benutzer in ihrer gewöhnlichen Umgebung zu ziehen, wobei insbesondere Rückschlüsse auf Werbe- und Marktingmaßnahmen möglich sind.

Gelöst wird diese Aufgabe mit einem Server-System, das mit einer Vielzahl von Client-Systemen über eine Netz-struktur verbunden ist, mit einer auf dem Server-System bereitgestellten, für den Benutzer die alltäglichen Verhaltensmöglichkeiten anbietenden virtuellen Realität, wobei die virtuelle Realität von dem Client-System darstellbar ist, und das Client-System Navigationsmittel zum Durchschreiten der virtuellen Realität aufweist, mit Verhaltensangeboten, die in der virtuellen Realität wirklichkeitsgetreu angeordnet sind, mit Kommunikationsangeboten, die in der virtuellen Realität wirklichkeitsgetreu angeordnet sind, mit einem Rückkopplungssystem, das die Verhaltensweisen des sich durch die virtuelle Realität bewegenden Benutzers auf die Verhaltensangebote und Kommunikationsangebote auswertet. Dabei steht das Rückkopplungssystem sowohl mit dem Client-System als auch mit dem Server-System in Verbindung, wodurch das Rückkopplungssystem die Reaktionen des Benutzers in Abhängigkeit von den Kommunikations- und Verhaltensangeboten protokolliert und statistisch auswertet. Zusätzlich wird jeder Benutzer in Form eines Avatars in der virtuellen Realität dargestellt und das Server-System vermittelt bei Bedarf eine Kommunikation zwischen den Avatars. Bei der Netzstruktur handelt es vorzugsweise um das Internet.

Hierdurch wird ein grundsätzliches Problem der einwegigen Kommunikation traditioneller Broadcast-Medien gelöst. Während z.B. das Fernsehen nur in eingeschränktem Maße Feedback-Kanäle bereitstellt und damit sehr komplizierte Technologien zur Zuschauerauswertung notwendig sind, stellt die vorliegende Erfindung direkte und schnelle Rückkopplungsmöglichkeiten zur Verfügung. Dadurch wird es nicht nur möglich, das spezifische Benutzerverhalten zu beobachten und seine Reaktionen auf ein Werbe-, Marketing- oder Informationsangebot zu analysieren, sondern auch ein grundsätzliches Problem der werbetechnischen Adressierung von Internet-Benutzern zu umgehen. Bisher gab es im Internet keinen Weg, einen spezifischen Benutzer direkt anzusprechen - abgesehen vom 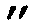 direct e-mailing", das jedoch durch entsprechende Filter unterbunden wird, da - anders als bei Broadcastmedien - der Benutzer zur Werbung kommen muß. Die Erfindung hingegen zentralisiert und strukturiert das globale Internet und fügt die Botschaften damit in die Verhaltensumgebung des Benutzers ein.

Eine weitere Aufgabe der vorliegenden Erfindung ist es, ein Verfahren zu schaffen, das mittels der og. Vorrichtung das Verhaltensmuster von Konsumenten und Informationssuchenden bestimmt.

Gelöst wird diese Aufgabe, indem eine möglichst realistische und strukturierte Beschreibung der Realität auf dem Server-System abrufbar gespeichert wird, indem sich ein Benutzer über ein Client-System am Server-System anmeldet, indem nach der Anmeldung die Beschreibung der virtuellen Realität zum Client-System übertragen wird und die virtuelle Realität durch Interpretation der Beschreibung durch das Client-System dargestellt wird, indem das Client-System in Abhängigkeit der vom Benutzer durch seine Navigationsmittel ausgeführten Bewegungen die virtuelle Realität verändert darstellt und bei Bedarf für die veränderte Darstellung neue Daten vom Server-System anfordert, indem Verhaltens- und Kommunikationsangebote in der virtuellen Realität wirklichkeitsgetreu angeordnet werden und indem das Verhalten und die Reaktion des Benutzers auf die Verhaltens- und Kommunikationsangebote durch ein Rückkopplungssystem protokolliert und statistisch ausgewertet werden. Dabei werden benutzerspezifische Daten bei der Anmeldung des Benutzers aus einer Benutzerdatenbank geladen, um sie dem Rückkopplungssystem zu Auswertungszwecken mitzuteilen. Die auf dem Server-System definierte virtuelle Realität ist in Form von Weltkarten, Landkarten, Stadtplänen, Straßen, Häusern, Geschäften, Geschäftseinrichtung, Möbeln, Avatars etc. hierarchisch strukturiert. Das Rückkopplungssystem bestimmt durch die Analyse der Verhaltens- und Bewegungsinformationen der Benutzer den Erfolg von unterschiedlichen Anordnungen, Aufmachungen und Inhalten von in der virtuellen Realität angeordneten Werbe- und Marketingmaßnahmen.

Weitere vorteilhafte Maßnahmen sind in den Unteransprüchen beschrieben. Die Erfindung ist in den beiliegenden Zeichnungen dargestellt und wird nachfolgend näher beschrieben; es zeigt:

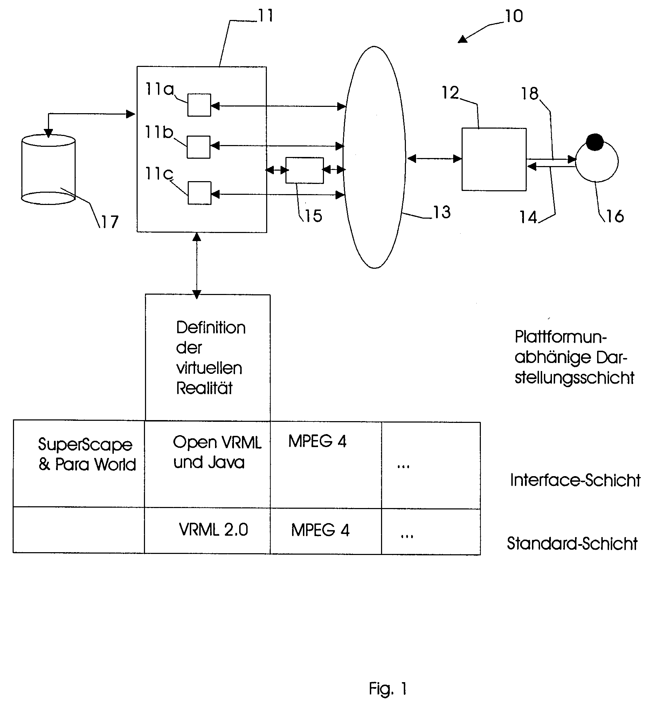

- **Figur 1**: den schematischen Aufbau des erfindungsgemäßen Open-Community-Systems, mit einem Server-System, das aus einer Vielzahl von über das Internet gekoppelter Server-Systeme besteht, mit einem über das Internet verbundenen Client-System, das Informationen für den Benutzer aufbereitet, mit Navigationsmittel durch die der Benutzer in der virtuelle Realität navigieren kann, mit einer Benutzerdatenbank, mit einer Plattformunabhängigen Darstellung der virtuellen Realität, die auf eine Interface- und einer Standard-Schicht basiert;

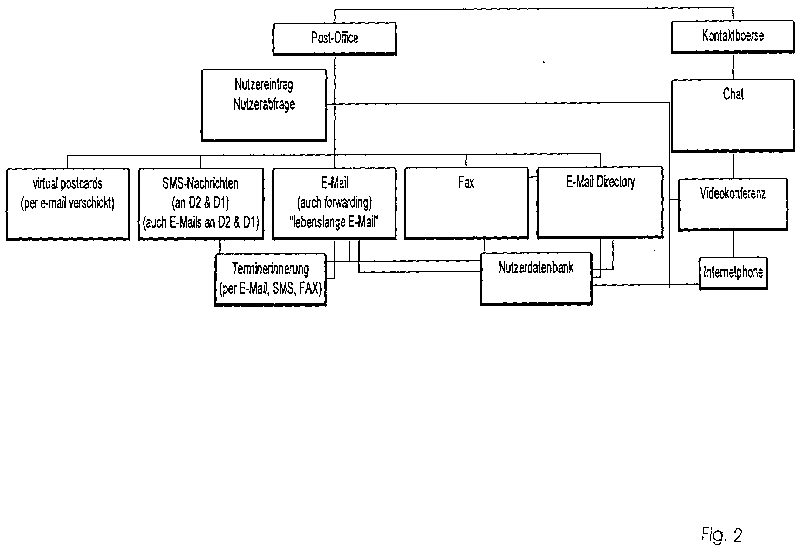

- **Figur 2**: die schematische Darstellung eines Post-Offices, das dem Benutzer diverse Möglichkeiten der Kommunikation, wie z.B. e-mails, SMS-Nachrichten, FAX, Videokonferenzen, Internetphone mit anderen Benutzern erlaubt.

Das in der Figur 1 dargestellte Open-Community-System 10 dient für mindestens einen Benutzer 16 als zentraler Ausgangsort für realitätsnahe Informationssuche. Dabei ist der Benutzer 16 vorzugsweise über das Intertnet 13 oder eine ähnliche Netzstruktur mit einem Server-System 11 verbunden.

Das Server-System 11 stellt dem Benutzer 16 die virtuellen Realität durch eine plattfromunabhängige Definition zur Verfügung. Der Benutzer 16 kann diese über ein Client-System 12 abrufen.

Die virtuelle Realität soll für den Benutzer möglichst realitätsnah definiert sein, und sie soll einen strukturierten Zugriff auf die gewünschten Informationen erlauben. Eine mögliche hierarchische Definition der virtuellen Realität ist in Form von Weltkarten, Landkarten, Stadtplänen, Straßen, Häusern, Geschäften, öffentlichen Einrichtungen, Geschäftseinrichtung, Möbeln, Avatars denkbar. In dieser virtuellen Realität besteht die Möglichkeit an unterschiedlichen realitätsnahen Orten Informations-, Werbe-, Kommunikations- und Marketingmittel anzuordnen.

Durch diese realitätsnahe Abbildung der realen Welt schafft die Open-Community-Plattform eine Umgebung, in der die Bestimmung von Verhaltensmustern von Konsumenten und Informationsssuchenden überhaupt effektiv und möglich ist, da nur hier ein alttagsäquivalentes Verhalten überhaupt möglich ist. Dabei ist es das Zusammenspiel von Bewegungsgraden und Kommunikationsmöglichkeiten, welches - in einer immateriellen Umgebung - 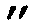 Verhalten" ermöglicht. Die Möglichkeit 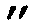 Gemeinschaft" zu erfahren besteht darin, daß der Benutzer kreativ ist und partizipiert. Dies ist der größte Anreiz, sich in der durch die Open-Community-Plattform bereitgestellten virtuellen Welt aufzuhalten.

Um die Plattformunabhängigkeit für die Darstellung der Definition der virtuellen Realität zu bewahren, baut diese auf einer Standard-Schicht auf, die z.B. VRML 2.0 oder MPEG 4 nutzt. Darüber liegt eine Interface-Schicht, die z.B. durch SuperScape & Para World, Open VRML, JAVA und MPEG 4 definiert ist. Alle diese Definitionen können auf unterschiedlichen Client-Systemen 12 dargestellt werden. Durch diese Abstraktionsschichten ist eine portable Definition der virtuellen Realität sichergestellt.

Das Client-System 12 ist vorzugsweise ein PC, der über einen Browser mit den entsprechenden Plugins verfügt, um diese virtuelle Realität darzustellen. Es ist aber auch eine andere Client-Software vorstellbar, die Navigationsmittel 14, wie Position-Trackers, Exo-skeleton, Daten-Handschuhe, Spracherkennungssystem, Elektro-Enzefallogrammsysteme unterstützt.

Als Ausgabemittel 18 kann das Client-System über Head-Mounted-Displays, Audiosysteme, Berührungssysteme und Force Feeback Full Motion Displays verfügen. Eine detaillierte Darstellung ist der Aufstellung der VR-Systeme nach Biocca zu entnehmen.

Das Open-Community-System 10 verfügt über ein Rückkopplungssystem 15, das jede Navigationsbewegung des Benutzers 16 protokolliert und in Verbindung mit der Definition der virtuellen Realität des Server-Systems 11 Rückschlüsse auf die Effizienz von Informations-, Marketing-, Werbe- und Kommunikationsangeboten zieht. So kann durch die Anzahl der Nutzungen eines Kommunikationsangebotes darauf geschlossen werden, ob dieses Angebot räumlich und optisch benutzerfreundlich angeordnet ist. Ebenso kann durch die an einem bestimmten virtuellen Ort verbrachte Zeit auf die Werbewirksamkeit eines Marketing- oder Werbeangebots geschlossen werden. Andere Heuristiken sind ebenfalls denkbar.

Mit Hilfe einer zentralen Benutzerdatenbank 17 können statistische Informationen bzgl. Alter, Bildung usw. in die Beurteilung der Werbewirksamkeit einfließen. Jeder neue Benutzer 16 wird in dieser Datenbank 17 registriert, wodurch dem Rückkopplungssystem 15 immer aktuelle Informationen zur Verfügung stehen.

Jeder Benutzer 16 wird In Form eines Avatars in der virtuellen Realität dargestellt. Dieser Avatar ist eine Repräsentation des Systemnutzers, die analog zu den Bewegungen und Verhalten des Benutzers 16 dargestellt wird. Dabei sind einfache graphische, aber auch photorealistische Darstellungen möglich. Ein Avatar ist somit ein virtueller Ansprechpartner in virtuellen Orten. Durch seine Erscheinungsform gibt er Aufschluß über seine Kommunikationsbereitschaft. Das Server-System 11 vermittelt bei Bedarf die Kommunikation zwischen den durch Avatars dargestellten Benutzern 16. Die Art der Kommunikation wird durch die Möglichkeiten des Client-Systems 12 beschränkt. So kann eine Videokonferenz nur erfolgen, wenn entsprechende Systemvoraussetzungen gegeben sind.

Zur Lastverteilung kann das Server-System 11 aus mehreren gekoppelten Server-Systemen 11a, 11b und 11c bestehen. Jedes dieser Server-System 11a, 11b und 11c kann z.B. die Definitionen für ein Land oder eine Stadt speichern. Die einzelnen Server-Systeme 11a, 11b und 11c sind über das Internet 13 miteinander gekoppelt. Für den Benutzer 16 erscheinen die physisch getrennten Server-Systeme 11a, 11b und 11c als eine logisches Server-System 11.

So stellt Figur 2 den Aufbau eines Post-Offices dar. In diesem virtuellen Post-Office stehen dem Benutzer nahezu die gleichen Funktionalitäten wie im wirklichen Leben zur Verfügung. Zu diesen Funktionalitäten gehört das Versenden von Briefen in Form von e-mails, das Versenden von Funktelefonnachrichten (SMS-Nachrichten), das versenden von FAXen, sowie die direkte Kommunikation via Videokonferenzen und Internetphone mit anderen Benutzern. Eine erfolgreiche Kommunikation wird durch eine entsprechende Terminierungsmeldung dem Benutzer 16 mitgeteilt.

Der Benutzer hat die Möglichkeit über die Nutzerdatenbank und den natürlichen Namen den gewünschten Kommunikationspartner zu ermitteln. Über eine Kontaktbörse steht dem Benutzer 16 im Post-Office ebenfalls die Möglichkeit des chatens zur Verfügung.

### Bezugszeichen

- 10: Open-Community-System
- 11: Server-System
- 11a, 11b, 11c: gekoppelte Server-Systeme
- 12: Client-System
- 13: Internet
- 14: Navigationsmittel
- 15: Rückkopplungssystem
- 16: Benutzer
- 17: Benutzerdatenbank
- 18: Ausgabemittel

## Patentansprüche

1. Vorrichtung zur Bestimmung von Verhaltensmustern von Konsumenten und Informationssuchenden,
- mit einem Server-System (11), das mit einer Vielzahl von Client-Systemen (12) über eine Netzstruktur (13) verbunden ist,
- mit einer auf dem Server-System (11) bereitgestellten, für den Benutzer (16) die alltäglichen Verhaltensmöglichkeiten anbietenden virtuellen Realität, wobei die virtuelle Realität von dem Client-System (12) darstellbar ist, und das Client-System (12) Navigationsmittel (14) zum Durchschreiten der virtuellen Realität aufweist,
- mit Verhaltensangeboten, die in der virtuellen Realität wirklichkeitsgetreu angeordnet sind,
- mit Kommunikationsangeboten, die in der virtuellen Realität wirklichkeitsgetreu angeordnet sind,
- mit einem Rückkopplungssystem (15), das die Verhaltensweisen des sich durch die virtuelle Realität bewegenden Benutzers (16) auf die Verhaltensangebote und Kommunikationsangebote auswertet.

2. Vorrichtung nach Anspruch 1, dadurch gekennzeichnet, daß das Rückkopplungssystem (15) sowohl mit dem Client-System (12) als auch mit dem Server-System (11) in Verbindung steht, und das Rückkopplungssystem (15) die Reaktionen des Benutzers (16) in Abhängigkeit von den Kommunikations- und Verhaltensangeboten protokolliert und statistisch auswertet.

3. Vorrichtung nach den Ansprüchen 1 und 2, dadurch gekennzeichnet, daß jeder Benutzer (16) in Form eines Avatars in der virtuellen Realität dargestellt ist und eine Kommunikation zwischen den Avatars möglich ist.

4. Vorrichtung nach den Ansprüchen 1 bis 3, dadurch gekennzeichnet, daß das Server-System (11) dem Benutzer (16) alltägliche und bekannte Verhaltensmöglichkeiten anbietet in Form einer 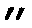 Open-Community-Plattform", in dem die virtuelle Realität strukturiert in Form von Landkarten, Stadtplänen, Straßen, Häusern, Geschäften, Geschäftseinrichtung, Möbeln, Avatars etc. dargestellt ist, wobei dem Benutzer ein Zusammenspiel von Bewegungsgraden und Kommunikationsmöglichkeiten in der Realität ermöglicht wird, um durch Kreativität und Partizipation Gemeinschaft zu erfahren.

5. Vorrichtung nach den Ansprüchen 1 bis 4, dadurch gekennzeichnet, daß das Navigationsmittel (14) Körperbewegungen und/oder Sprache und/oder Verhaltensweisen des vegetativen Nervensystems in Bewegungen in der virtuellen Realität umwandelt.

6. Vorrichtung nach Anspruch 5, dadurch gekennzeichnet, daß das Navigationsmittel (14) ein Position-Tracker und/oder ein Exo-Skeleton und/oder ein Data-Glove ist.

7. Vorrichtung nach den Ansprüchen 1 bis 6, dadurch gekennzeichnet, daß das Client-System (12) visuelle und/oder taktile und/oder akustische Wiedergabemittel, wie z.B. ein Display oder ein Head-Mounted-Display, aufweist.

8. Vorrichtung nach den Ansprüchen 1 bis 7, dadurch gekennzeichnet, daß das Server-System (11) die virtuelle Realität durch standardisierte Beschreibungssprachen beschreibt die vom Client-System (13) interpretiert werden.

9. Vorrichtung nach Anspruch 8, dadurch gekennzeichnet, daß das Server-System (11) eine Kommunikation der Avatars in Form einer Videokonferenz und/oder Internettelephonie und/oder Chat und/oder E-Mail vermittelt.

10. Vorrichtung nach den Ansprüchen 1 bis 9, dadurch gekennzeichnet, daß das Server-System (11) aus einer Vielzahl von unabhängigen gekoppelten Server-Systemen (11a, 11b, 11c) besteht, die untereinander kommunizieren, wobei die einzelnen Server-Systeme (11a, 11b, 11c) für den Benutzer (16) als eine logische Einheit zusammengefaßt sind.

11. Vorrichtung nach Anspruch 10, dadurch gekennzeichnet, daß die einzelnen gekoppelten Server-Systeme (11a, 11b, 11c) ebenfalls über die Netzstruktur (13) miteinander kommunizieren und jedes einzelne Server-System (11a, 11b, 11c) den Zugang zur Darstellung der virtuelle Realität erlaubt.

12. Vorrichtung nach den Ansprüchen 1 bis 11, dadurch gekennzeichnet, daß das die Netzstruktur (13) das Internet ist.

13. Verfahren zur Bestimmung von Verhaltensmustern von Konsumenten und Informationssuchenden, mittels der Vorrichtung nach den Ansprüchen 1 bis 12,
- bei dem eine möglichst realistische und strukturierte Beschreibung der Realität auf dem Server-System abrufbar gespeichert wird,
- bei dem sich ein Benutzer über ein Client-System am Server-System anmeldet,
- bei dem nach der Anmeldung die Beschreibung der virtuellen Realität zum Client-System übertragen wird und die virtuelle Realität durch Interpretation der Beschreibung durch das Client-System dargestellt wird,
- bei dem das Client-System in Abhängigkeit der vom Benutzer durch seine Navigationsmittel ausgeführten Bewegungen die virtuelle Realität verändert darstellt und bei Bedarf für die veränderte Darstellung neue Daten vom Server-System anfordert,
- bei dem Verhaltens- und Kommunikationsangeboten in der virtuellen Realität wirklichkeitsgetreu angeordnet werden und
- bei dem das Verhalten und die Reaktion des Benutzers auf die Verhaltens- und Kommunikationsangebote durch ein Rückkopplungssystem protokolliert und statistisch ausgewertet werden.

14. Verfahren nach Anspruch 13, dadurch gekennzeichnet, daß benutzerspezifische Daten bei der Anmeldung des Benutzers aus einer Benutzerdatenbank geladen werden und dem Rückkopplungssystem zu Auswertungszwecken mitgeteilt werden.

15. Verfahren nach den Ansprüchen 13 und 14, dadurch gekennzeichnet, daß jeder Benutzer als Avatar dargestellt wird, und das Server-System je nach Möglichkeiten des Client-Systems eine Kommunikation zwischen den Benutzer vermittelt.

16. Verfahren nach den Ansprüchen 13 bis 15, dadurch gekennzeichnet, daß die auf dem Server-System abgelegte virtuelle Realität in Form von Weltkarten, Landkarten, Stadtplänen, Straßen, Häusern, Geschäften, Geschäftseinrichtung, Möbeln, Avatars etc. hierarchisch strukturiert ist.

17. Verfahren nach den Ansprüchen 13 bis 16, dadurch gekennzeichnet, daß das Rückkopplungssystem durch die Analyse der Verhaltens- und Bewegungsinformationen der Benutzer den Erfolg von unterschiedlichen Anordnungen, Aufmachungen und Inhalten von in der virtuellen Realität angeordneten Werbe- und Marketingmaßnahmen bestimmt.

18. Verfahren nach Anspruch 17, dadurch gekennzeichnet, daß das Rückkopplungssystem durch den Vergleich der Verhaltens- und Bewegungsinformationen der Benutzer auf unterschiedlichen Anordnungen und Aufmachungen von Werbe- und Marketingmaßnahmen mit ähnlichem Inhalt die beste Alternative ermittelt.
